Europäisches Patentamt

European Patent Office

Office européen des brevets

(19)

(11) Numéro de publication: **0 186 539
B1**

(12) **FASCICULE DE BREVET EUROPEEN**

(45) Date de publication du fascicule du brevet:
**31.01.90**

(51) Int. Cl.⁴: **B 23 K 1/08**

(21) Numéro de dépôt: **85402213.4**

(22) Date de dépôt: **15.11.85**

(54) **Machine de soudage.**

(30) Priorité: **15.11.84 FR 8417452**

(43) Date de publication de la demande:
**02.07.86 Bulletin 86/27**

(45) Mention de la délivrance du brevet:
**31.01.90 Bulletin 90/5**

(84) Etats contractants désignés:
**AT BE CH DE GB IT LI LU NL SE**

(56) Documents cités:
**DE-C- 3 141 825**

(73) Titulaire: **OUTILLAGES SCIENTIFIQUES ET DE
LABORATOIRES O.S.L. S.A., Z.I. Carros - 2e Casier - Lot
R, F-06510 Carros Industries (FR)**

(72) Inventeur: **Simonetti, Jean-Pierre, 18, allée de
Chanteraine, F-91190 Gif-Sur-Yvette (FR)**

(74) Mandataire: **Clanet, Denis et al, Cabinet Beau de
Loménie 55, rue d'Amsterdam, F-75008 Paris (FR)**

## Description

La présente invention concerne une machine de soudage à la vague.

Ces machines comportent, de manière typique, un bâti de forme allongée sur lequel sont disposés successivement un dispositif de fluxage, un appareil de préchauffage puis un pot de soudage, ainsi qu'un convoyeur sensiblement horizontal ou en légère pente montante ou descendante au-dessus de ces éléments, destiné à entraîner des cartes de circuits imprimés suivant un trajet approprié vis-à-vis du dispositif de fluxage, de l'appareil de préchauffage et du pot de soudage en particulier.

Un capotage recouvre l'ensemble à la fois pour éviter la pénétration de poussières depuis l'extérieur qui nuiraient à la bonne qualité des soudures, pour éviter également les mouvements incontrôlés des masses d'air, et pour empêcher que les émanations qui se produisent dans la machine ne se répandent à l'extérieur. Ce capotage est muni de vitres permettant le contrôle visuel des opérations se déroulant dans la machine, ainsi que de portes donnant accès aux différents éléments en vue des interventions nécessaires, en particulier le nettoyage de la machine.

Enfin, la machine comporte un pupitre de commande, éventuellement scindé en plusieurs pupitres partiels, fixé latéralement sur le bâti.

On connaît du DE-A 3 141 825 une machine de soudage à la vague pour cartes de circuits imprimés, comprenant un bâti de forme allongée reposant au sol et définissant à sa partie supérieure un plan d'installation sur lequel sont disposés les éléments consitutifs de la machine, à savoir: un dispositif de fluxage, un dispositif de préchauffage et un dispositif de soudage, ainsi qu'un convoyeur s'étendant au-dessus des dispositifs précités sensiblement horizontalement ou en pente légèrement montante ou descendante et destiné à entraîner des cartes de circuits imprimés suivant un trajet approprié vis-à-vis des dispositifs de la machine; lesdits éléments constitutifs présentant un plan médian vertical longitudinal, ladite machine comportant un capotage recouvrant lesdits éléments et muni de fenêtres d'inspection visuelle et de portes d'accès, une partie au moins du capotage étant montée à rotation autour d'un axe horizontal situé au-dessus des éléments constitutifs de la machine depuis une position fermée jusqu'à une position ouverte dans laquelle ladite partie du capotage est située à une hauteur suffisante au-dessus du sol pour le passage d'un opérateur.

Le problème que vise à résoudre l'invention est de concevoir une machine de soudage, comme exposée ci-avant, de manière à présenter une excellente accessibilité tant visuelle que physique, permettant un bon contrôle de fonctionnement, une réduction de la durée de maintenance ou d'interventions de nettoyage, de mise au point, de réparation, etc . . .

A cet effet, selon la présente invention, une machine du type précitée est caractérisée en ce que ledit capotage comporte d'un côté dudit plan médian et sensiblement sur toute la longueur de la machine une paroi frontale, vitrée sur la majeure partie de sa surface, inclinée en position fermée, depuis une arête supérieure sensiblement horizontale située au-dessus des éléments constitutifs et au voisinage de leur plan médian jusqu'une arête inférieure sensiblement horizontale située en porte-à-faux à l'extérieur des éléments constitutifs et à courte distance, dans le sens vertical, dudit plan d'installation, ladite paroi frontale étant montée à rotation autour de son arête supérieure depuis ladite position fermée jusqu'à une position ouverte dans laquelle ladite arête inférieure est située à une hauteur suffisante au-dessus du sol pour le passage d'un opérateur et en ce que le capotage comporte un volet incliné rabattable s'étendant entre ledit plan d'installation et l'arête inférieure de la paroi frontale.

Les avantages et autres détails de l'invention apparaîtront plus clairement à la lecture de la description qui va suivre, en se référant aux dessins annexés, dans lesquels:
- la figure 1 est une vue en perspective d'ensemble de la machine selon l'invention, en situation de fonctionnement normal;
- la figure 2 est une vue en perspective semblable à celle de la figure 1, la machine étant à l'arrêt et son capotage ouvert;
- la figure 3 est une vue d'extrémité illustrant le champ de visibilité de la machine, pour des sujets de grande et de petite tailles;
- la figure 4 est une vue en coupe schématique illustrant l'accessibilité interne de la machine, pour des sujets de grande et de petite tailles;
- la figure 5 est une vue détaillée du montage du pupitre commande de la machine; et
- la figure 6 est une vue en coupe schématique prise au niveau du pot de soudage.

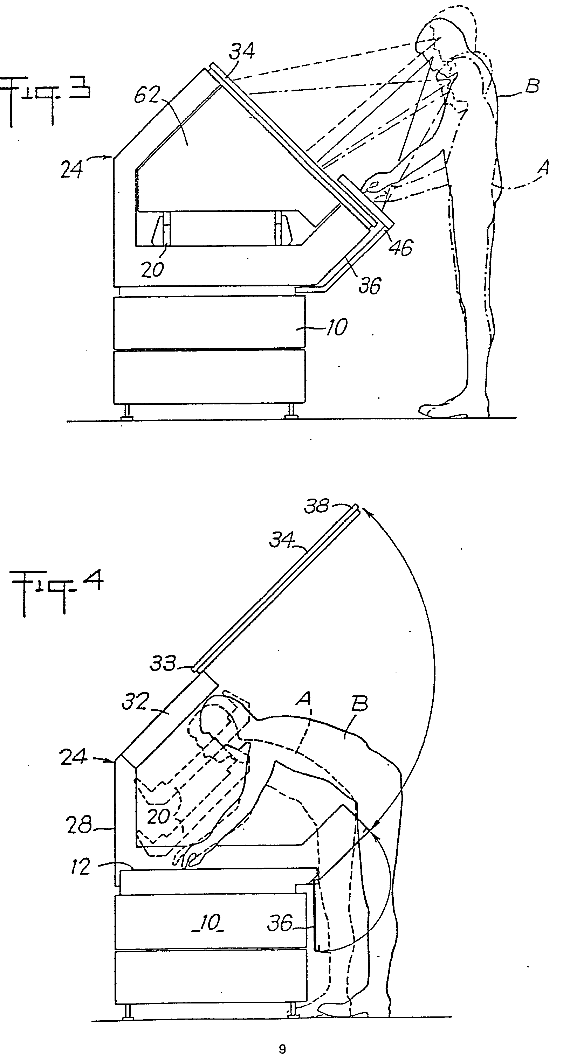

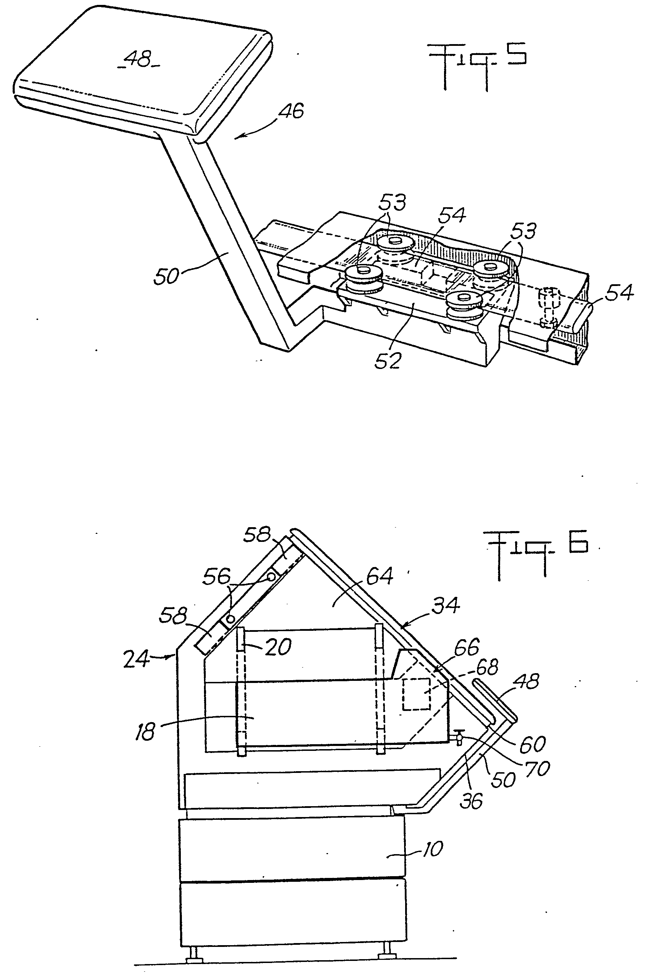

La machine de soudage conforme à l'invention est illustrée en perspective à la figure 1 dans sa condition de fonctionnement normal dite «fermée», et à la figure 2 dans une condition «ouverte» où son capotage est dégagé pour permettre l'accès à ses éléments intérieurs.

La machine se compose d'un bâti allongé 10 coiffé par un plan d'installation 12, sur lequel sont disposés successivement:
- un dispositif de fluxage 14,
- un dispositif de préchauffage 16,
- un dispositif de soudage 18, appelé communément pot de soudage.

Au dessus de ces dispositifs s'étend un convoyeur 20 destiné à entraîner des cartes de circuits imprimés (non-représentées) suivant un trajet rectiligne, horizontal ou encore en pente légèrement montante ou descendante, de telle manière que les cartes disposées à plat se présentent successivement face au dispositif de fluxage où leurs faces inférieurs viennent lécher une vague de produit de fluxage, puis face au dispositif de préchauffage où elles sont portées à une température prédéterminé, et enfin face au pot de soudage où leurs faces inférieures viennent lécher une vague d'alliage de soudure fondu produite par une buse supérieure.

La machine comporte un capotage, désigné dans son ensemble par la référence 22, destiné à empêcher la pénétration de poussières provenant de l'extérieur et à éviter des mouvements d'air incontrôlés au voisinage des dispositifs mentionnés ci-dessus, qui nuiraient à la bonne qualité des soudures, ainsi qu'à empêcher que les émanations qui se produisent dans la machine ne se répandent à l'extérieur.

De manière à procurer une excellente accessibilité tant visuelle que physique, le capotage est réalisé comme suit:
de part et d'autre d'un plan médian vertical longitudinal P, qui correspond grosso-modo à un plan de symétrie général des dispositifs de la machine et du convoyeur, le capotage comprend une paroi fixe 24 et des parois amovibles 26, sensiblement sur toute la longueur de la machine.

La paroi fixe, dite paroi postérieure eu égard au côté par lequel on accède à la machine, comporte un tronçon vertical (28) depuis le bord postérieur 30 du plan d'installation, suivi d'un tronçon 32 incliné à 45° se terminant en une arête supérieure 33 sensiblement horizontale et située dans le plan médian P, où à courte distance de celui-ci.

Les parois amovibles 26 comprennent une paroi vitrée frontale 34 et un volet rabattable 36. La paroi vitrée 34 s'étend, en position fermée illustrée à la figure 1, depuis l'arête supérieure 33, jusqu'à une arête inférieure 38, horizontale également et située en porte-à-faux à l'extérieur de la machine et à courte distance, dans le sens vertical, au dessus du plan d'installation. De préférence, la paroi vitrée est plane et inclinée également à 45° et elle est vitrée sur la majeure partie de sa surface, le vitrage 40 étant réalisé par une feuille de verre ou de matière plastique transparente entourée d'un cadre 42.

Le volet rabattable 36, non vitré, s'étend depuis le bord antérieur 44 du plan d'installation jusqu'à l'arête inférieure 38 de la paroi vitrée. Son inclinaison, opposée à celle de la paroi vitrée est de préférence également voisine de 45°.

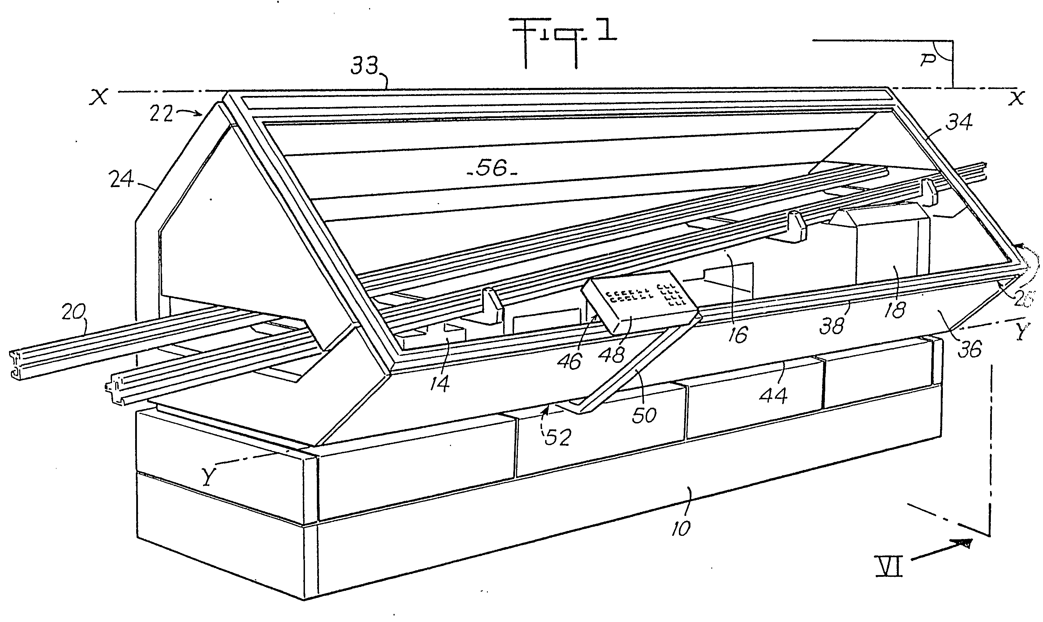

Comme illustré à la figure 3, la disposition particulière de la paroi vitrée 34 permet une excellente inspection visuelle de l'intérieur de la machine, tant par des personnes de petite taille (personnage A) que par des personnes de grande taille (personnage B). Toutes les parties de la machine sont accessibles au regard, aussi bien les parties voisines du sommet que les parties voisines du plan d'installation depuis son bord postérieur jusqu'à son bord antérieur, et ceci sans modification importante de posture notamment de la tête.

La paroi vitrée 34 est montée à rotation autour d'un axe XX qui coincide sensiblement avec son arête supérieure 33, depuis la position fermée, jusqu'à une ouverte, illustré à la figure 2, dans laquelle son arête inférieure 38 est à une hauteur au dessus du sol suffisante pour le passage d'un opérateur.

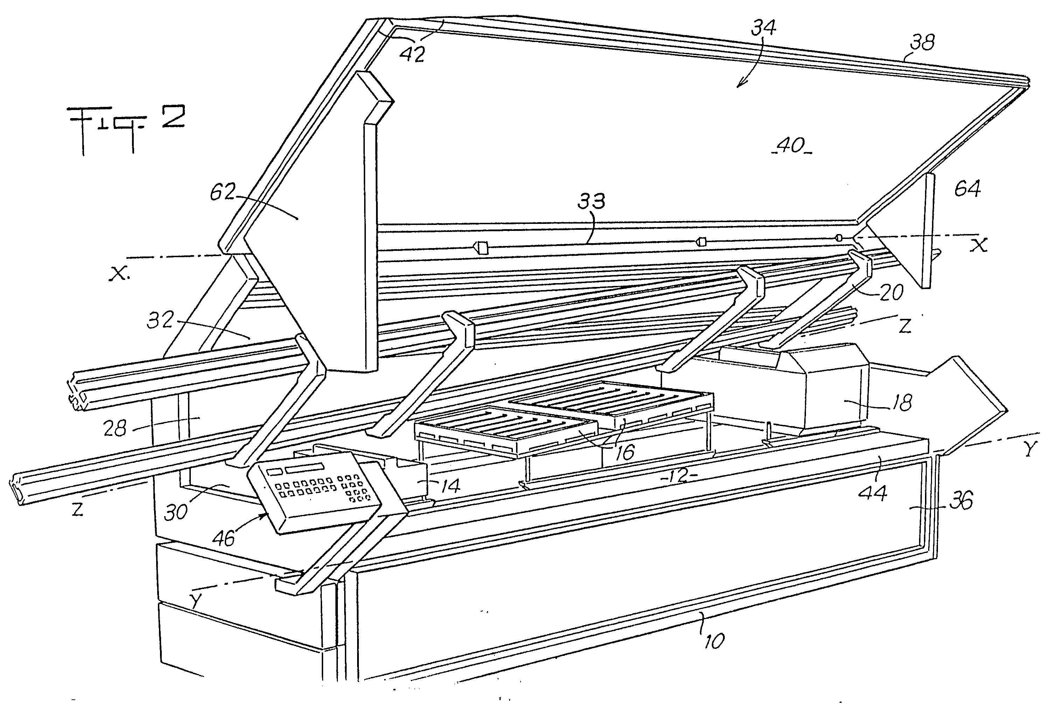

Comme illustré à la figure 4, la paroi vitrée s'étend en position ouverte sensiblement dans l'alignement du tronçon incliné de la paroi postérieure fixe et son arête inférieure est alors à une distance au dessus du sol accessible par extension du bras. En réalité, on peut prévoir une inclinaison différente de la paroi vitrée en position ouverte pour autant que l'accessibilité par un opérateur soit préservée.

En complément, le volet rabattable est monté à rotation autour d'un axe YY coincidant sensiblement avec le bord antérieur du plan d'installation.

Tout le volume intérieur de la machine est donc accessible aussi bien par des personnes de petite taille (personnage A) que par des personnes de grande taille (personnage B), la position de travail étant particulièrement favorable sur le plan ergonomique.

Cette facilité d'accès est appréciable non seulement lorsqu'il s'agit de réparations et/ou réglages sur les dispositifs constitutifs de la machine, mais encore, plus prosaïquement, lorsqu'il s'agit d'assurer le nettoyage et la maintenance préventive. Dans nombre de machines existantes de ce type, cet accès est assuré au moyen de trappes localisées et/ou par coulissement latéral de panneaux vitrés, ou encore par démontage ou relevage complet du capotage. On conçoit que grâce à la structure de l'invention, on évite des manipulations et des pertes de temps inutiles.

La paroi postérieure fixe est également montée amovible sur le bâti de machine, ce qui permet son démontage s'il en est besoin.

La machine comporte également un pupitre de commande mobile 46, composé d'un coffret-tableau 48 et d'une potence de liaison 50, montée sur le bâti par l'intermédiaire d'un chariot 52. Comme illustré à la figure 5, le chariot 52 comporte des roulements 53 coopérant avec un rail 54 solidaire du bâti sur toute la longueur de celui-ci.

Dans la position de fonctionnement normal de la machine (figure 1) le pupitre peut-être déplacé sur toute la longueur de la machine et être amené à volonté face à chacun des dispositifs constitutifs. On peut ainsi modifier les paramètres de fonctionnement de chacun de ces dispositifs tout en conservant sur eux un contrôle visuel immédiat.

Dans cette position également, le pupitre assure une sécurité positive à l'encontre de l'ouverture accidentelle de la machine. En effet, le coffret tableau est orienté parallèlement à la paroi vitrée et à courte distance de celle-ci au voisinage de son arête inférieure, ce qui empêche physiquement son ouverture; la potence 50 est orientée parallèlement au volet rabattable et à courte distance de celui-ci, ce qui empêche également son ouverture.

Pour permettre l'ouverture de la paroi vitrée et/ou de volet rabattable, il convient de déplacer le pupitre jusqu'à une position extrême (figure 2) dans laquelle le coffret-tableau et la potence sont situés au delà de l'emprise longitudinale du capotage. La paroi vitrée et le volet rabattable peuvent alors être ouverts. La présence du volet rabattable en position ouverte constitue un obstacle mécanique au retour du pupitre vers une quelconque position de travail. Avantageusement, on prévoira également une sécurité électro-mécanique empêchant le retour du chariot, ou à tout le moins la neutralisation du clavier de pupitre, puisque le démontage du volet rabattable permettrait le retour du pupitre vers une position de travail.

Pour autoriser toutefois à du personnel qualifié de mettre en route la machine en configuration ouverte et procéder à des réglages et/ou vérifications, cette sécurité électro-mécanique – ou cette neutralisation du clavier de pupitre – peut être annulée au moyen d'un dispositif à clé, ou encore par composition d'un code sur le clavier de pupitre.

Lorsqu'on considère la coupe schématique de la figure 6, on remarque que le tronçon incliné de la paroi postérieure fixe est garni intérieurement d'un dispositif d'éclairage étanche 56 qui procure un excellent éclairage de l'intérieur de la machine, sans être tributaire d'un éclairage ambiant souvent inadapté.

Sa disposition à l'intérieur de la machine évite l'apparition de reflets sur la paroi vitrée frontale, comme ce serait le cas avec un éclairage extérieur. En outre, son orientation sensiblement latérale par rapport au champ de vision (figure 3) évite tout éblouissement de l'opérateur.

Le même tronçon incliné de la paroi postérieure est également garni d'un dispositif d'aspiration d'air 58, destiné à évacuer les fumées et émanations qui se produisent à l'intérieur de la machine.

L'entrée d'air s'effectue d'une part via les ouvertures correspondant au convoyeur aux deux extrémités de la machine, et d'autre part via une lèvre 60 ménagée soit entre la paroi vitrée et le volet rabattable, soit entre cette dernière et le plan d'installation. Il n'y a donc pratiquement pas de zones «mortes», c'est-à-dire de zones non balayées par le flux d'air traversant la machine.

A ses deux extrémités, la paroi vitrée porte des joues d'obturation verticales 62 et 64, occupant, dans la position fermée, tout l'espace séparant la paroi vitrée, la paroi postérieure fixe et le bord supérieur du convoyeur 22 considéré en position de travail.

Ces joues d'obturation assurent donc la fermeture de la machine à ses extrémités de sorte que le seul passage libre pour l'air est représenté par les ouvertures correspondant au convoyeur. Elles constituent en outre un obstacle physique destiné à empêcher le relèvement du convoyeur lorsque la paroi vitrée est en position fermée (figure 1).

Lorsque la paroi vitrée est en position ouverte (figure 2) et que le convoyeur est en position relevée, par basculement autour d'un axe longitudinal latéral ZZ, les joues d'obturation empêchent la fermeture de la paroi vitrée tant que le convoyeur n'a pas été préalablement ramené en position de travail abaissée. Il convient bien entendu que l'axe ZZ soit situé du côté opposé à la paroi vitrée 34 par rapport au plan médian P.

On notera également à la figure 6, que certains composants 66 du pot de soudure 18 sont agencés en déport latéral par rapport au convoyeur et au plan d'installation, dans une zone inscrite entre la paroi vitrée et le volet rabattable en position fermée.

Ces composants comprennent de préférence la pompe de circulation d'alliage de soudure liquide 68 et les organes associés; moteur, transmission, régulateur, ainsi que la robinetterie de vidange 70.

Leur accessibilité est donc immédiate lors de l'ouverture de la machine et il n'est donc pas nécessaire de déposer le pot de soudure, avec les inconvénients que cela entraînerait, lors des interventions habituelles (maintenance) ou exceptionnelles (réparations). De plus, il n'est pas non plus nécessaire de déposer le pot de soudure lorsqu'on voit vidanger l'alliage de soudure liquide puisque la robinetterie de vidange débouche à l'extérieur du plan d'installation.

De ce qui précède, on notera enfin que le capotage est entièrement démontable et dans la mesure où il ne porte aucun des éléments fonctionnels essentiels de la machine, la machine peut être tout d'abord assemblée et mise au point sans son capotage, donc accessible par tous ses côtés pendant cette phase, le capotage étant assemblé au dernier moment, sans obliger à procéder à des réglages complémentaires du fait de son assemblage.

Bien que l'on ait précisé que les divers éléments inclinés du capotage ont une inclinaison préférentielle de 45 degrés (paroi vitrée, volet rabattable, tronçon incliné de paroi fixe) il va de soi que cet angle n'est pas impératif et pourra être choisi dans une gamme comprise entre 30° et 60°.

**Revendications**

1. Machine de soudage à la vague pour cartes de circuits imprimés, comprenant un bâti (10) de forme allongée reposant au sol et définissant à sa partie supérieure un plan d'installation (12) sur lequel sont disposés les éléments constitutifs de la machine, à savoir: un dispositif de fluxage (14), un dispositif de préchauffage (16) et un dispositif de soudage (18), ainsi qu'un convoyeur (20) s'étendant au-dessus des dispositifs précités sensiblement horizontalement ou en pente légèrement montante ou descendante et destiné à entraîner des cartes de circuits imprimés suivant un trajet approprié vis-à-vis des dispositifs de la machine; lesdits éléments constitutifs présentant un plan médian vertical longitudinal (P), ladite machine comportant un capotage (22) recouvrant lesdits éléments et muni de fenêtres d'inspection visuelle et de portes d'accès, une partie au moins du capotage étant montée à rotation autour d'un axe horizontale situé au-dessus des éléments constitutifs de la machine, depuis une position fermée jusqu'à une position ouverte dans laquelle ladite partie de capotage est située à une hauteur suffisante au-dessus du sol pour le passage d'un opérateur, caractérisée en ce que ledit capotage comporte d'un côté dudit plan médian et sensiblement sur toute la longueur de la machine une paroi frontale (34), vitrée sur la majeure partie de sa surface, inclinée en position fermée, depuis une arête supérieure (33) sensiblement horizontale située au-dessus des éléments constitutifs et au voisinage de leur plan médian jusqu'à une arête inférieure (38) sensiblement horizontale située en porte-à-faux à l'extérieur des éléments constitutifs et à courte distance, dans le sens vertical, dudit plan d'installation, ladite paroi frontale étant montée à rotation autour de son arête supérieure depuis ladite position fermée jusqu'à une position ouverte dans laquelle ladite arête inférieure est située à une hauteur suffisante au-dessus du sol pour le passage d'un opérateur, et en ce que ledit capotage comporte un volet incliné rabattable (36) s'étendant entre ledit plan d'installation (12) et l'arête inférieure (38) de la paroi frontale (34).

2. Machine selon la revendication 1, caractérisée en ce qu'elle comporte, de l'autre côté dudit plan médian, une paroi postérieure fixe (24) s'étendant entre ledit plan d'installation (12) et l'arête supérieure (33) de la paroi frontale.

3. Machine selon la revendication 2, caractérisée en ce que ladite paroi postérieure (24) comporte un tronçon vertical (28) depuis ledit plan d'installation, suivi d'un tronçon incliné (32) aboutissant à ladite arête supérieure.

4. Machine selon la revendication 3, caractérisée en ce que ledit tronçon incliné (32) de la paroi postérieure fixe est garni intérieurement d'un dispositif d'éclairage (56) étanche.

5. Machine selon la revendication 3 ou 4, caractérisée en ce que ledit tronçon incliné (32) de la paroi postérieure fixe est garni intérieurement d'un dispositif d'aspiration d'air (58), et qu'elle comporte une lèvre d'entrée d'air (60) au voisinage de l'arête inférieure (38) de la paroi frontale (34).

6. Machine selon l'une quelconque des revendications 2 à 5, équipée d'un pupitre de commande (46), caractérisée en ce que ledit pupitre de commande est monté mobile sur ledit bâti (10) entre une position de travail et une position d'effacement, ledit pupitre constituant dans ladite position de travail, un dispositif de blocage de la paroi vitrée et du volet rabattable en position fermée.

7. Machine selon la revendication 6, caractérisée en ce que ledit pupitre de commande (46) comporte un coffret-tableau (48) orienté parallèlement à la paroi vitrée (34) et à courte distance de celle-ci au voisinage de son arête inférieure (38), et une potence de liaison (50) entre le bâti et le coffret-tableau, orientée parallèlement au volet rabattable et à courte distance de celui-ci.

8. Machine selon la revendication 7, caractérisée en ce que ledit pupitre (46) est monté sur un chariot (52) guidé en translation sur ledit bâti (10) et sur toute la longueur de la machine, le long de laquelle il peut donc prendre toute position de travail désirée, ladite position d'effacement du pupitre correspondant à une translation extrême du chariot (52) pour laquelle le coffret-tableau (48) et la potence de liaison (50) sont situés au-delà de l'emprise longitudinale de la paroi vitrée (34) et du volet rabattable (36).

9. Machine selon l'une quelconque des revendications 2 à 8, caractérisée en ce que la paroi vitrée (34) et le volet rabattable (36) ont des inclinaisons, opposées mutuellement par rapport au plan médian vertical, comprises en 30 et 60 degrés.

10. Machine selon la revendication 9, caractérisée en ce que lesdites inclinaisons sont voisines de 45 degrés.

11. Machine selon la revendication 10 prise en dépendance de la revendication 3, caractérisée en ce que le tronçon incliné (32), de la paroi postérieure fixe à une inclinaison, opposée de celle de la paroi vitrée (34) par rapport au plan médian vertical (P), voisine de 45 degrés.

12. Machine selon l'une quelconque des revendications 1 à 11, équipée d'un convoyeur (20) basculant autour d'un axe longitudinal (ZZ) latéral, caractérisée en ce que ledit axe est situé, par rapport audit plan médian vertical (P), du côté opposé à la paroi vitrée (34), et que ladite paroi vitrée porte, à chaque extrémité, des joues d'obturation verticales (62, 64) occupant, pour la position fermée de ladite paroi vitrée, tout l'espace séparant la paroi vitrée, la paroi posatérieure fixe et le bord supérieur de convoyeur considéré en position de travail.

13. Machine selon l'une quelconque des revendications 2 à 12, dans laquelle ledit pot de soudage (18) comporte au moins une pompe (68) de circulation d'alliage de soudure liquide et une robinetterie de vidange (70), caractérisée en ce que ladite pompe de circulation, la robinetterie de vidange et les organes éventuellement associés (66) sont agencés en déport latéral par rapport audit plan d'installation et audit convoyeur, dans une zone inscrite entre la paroi vitrée (34) et le volet rabattable (36) en position fermée.

**Patentansprüche**

1. Schwallötmaschine für gedruckte Leiterplatten, umfassend ein am Boden ruhendes längliches Gestell (10), welches an seiner Oberseite eine Installationsebene (12) definiert, auf der die Bestandteile der Maschine angeordnet sind, nämlich: eine Benetzungsvorrichtung (14), eine Vorheizungsvorrichtung (16) und eine Lötvorrichtung (18) sowie ein Förderband (20), welches sich oberhalb der vorgenannten Vorrichtungen im wesentlichen horizontal oder leicht ansteigend oder absteigend erstreckt und dazu bestimmt ist, die Leiterplatten entlang einer passenden Bewegungsbahn bezüglich der Vorrichtungen der Maschine zu bewegen; die genannten Bestandteile weisen eine vertikale Längsmittelebene (P) auf, die Maschine umfasst eine Abdeckhaube (22), die die genannten Elemente abdeckt und mit Inspektionsfenstern und Handhabungsöffnungen versehen ist, wobei zumindest ein Teil der Abdeckhaube um eine horizontale Achse, die oberhalb der Bestandteile der Maschine angeordnet ist, von einer geschlossenen Lage bis in eine offene Lage verdrehbar ist, in der sich die Abdeckhaube in einer genügend hohen Lage über dem Boden befindet, um einen Handwerker durchzulassen, dadurch gekennzeichnet, dass die Abdeckhaube auf einer Seite der genannten Mittelebene und im wesentlichen über die ganze Länge der Maschine einen Frontschirm (34) aufweist, der über den grössten Teil seiner Oberfläche verglast ist und der in geschlossener Lage der Abdeckhaube von einer Oberkante (33), die im wesentlichen horizontal und oberhalb der Bestandteile und deren Mittelebene benachbart liegt, bis zu einer Unterkante (38), die im wesentlichen horizontal freiragend ausserhalb der Bestandteile und in vertikaler Richtung in kurzem Abstand von der Installationsebene liegt, geneigt verläuft, wobei der Frontschirm um seine Oberkante von der geschlossenen Lage bis in eine offene Lage verdreht werden kann, in der die untere Kante in einer Höhe über dem Fussboden liegt, die ausreicht, um den Durchgang eines Mechanikers zu erlauben und dadurch, dass die Abdeckhaube einen geneigten abklappbaren Flügel (36) umfasst, der sich zwischen der Installationsebene (12) und der Unterkante (38) des Frontschirms (34) erstreckt.

2. Maschine nach Anspruch 1, dadurch gekennzeichnet, dass sie auf der anderen Seite der Mittelebene eine fixen hinteren Schirm (24) aufweist, der sich zwischen der Installationsebene (12) und der Oberkante (33) des Frontschirms erstreckt.

3. Maschine nach Anspruch 2, dadurch gekennzeichnet, dass der hintere Schirm (24) einen vertikalen Abschnitt (28), der von der Installationsebene ausgeht, gefolgt von einem geneigten Abschnitt (32), der an die obere Kante (33) anstösst, umfasst.

4. Maschine nach Anspruch 3, dadurch gekennzeichnet, dass der geneigte Abschnitt (32) des hinteren fixen Schirmes an seiner Innenseite mit einer dichten Beleuchtungsvorrichtung (56) versehen ist.

5. Maschine nach Anspruch 3 oder 4, dadurch gekennzeichnet, dass der geneigte Abschnitt (32) des hinteren fixen Schirmes an seiner Innenseite mit einer Luftansaugvorrichtung (58) versehen ist und dass sie einen Lufteinlassschlitz (60) in Nachbarschaft der unteren Kante (38) des Frontschirmes (34) aufweist.

6. Maschine nach einem der Ansprüche 2 bis 5, die mit einem Schaltpult (46) versehen ist, dadurch gekennzeichnet, dass das Schaltpult auf dem Gestell (10) zwischen einer Arbeitslage und einer Servicelage beweglich angeordnet ist, wobei das Pult in der Arbeitslage eine Blockiervorrichtung für den verglasten Schirm und den abklappbaren Flügel in der geschlossenen Lage bildet.

7. Maschine nach Anspruch 6, dadurch gekennzeichnet, dass das Befehlspult (46) ein Schaltkästchen (48), das parallel zum verglasten Schirm (34) in kurzem Abstand von ihm und seiner Unterkante (38) benachbart angeordnet ist und einen Verbindungsstab (50) zwischen dem Gestell und dem Schaltkästchen, der parallel zum abklappbaren Flügel und in kurzem Abstand von ihm vorgesehen ist, umfasst.

8. Maschine nach Anspruch 7, dadurch gekennzeichnet, dass das Pult (46) auf einem Schlitten (52) montiert ist, der über die gesamte Länge der Maschine längsverschieblich auf dem Gestell (10) angeordnet ist, wobei er an jeder beliebigen Stelle eine Arbeitslage einnimmt und wobei die Serviceposition des Pultes einem der Endpunkten der Verschiebung des Schlittens (52) entspricht, in der das Schaltkästchen (58) und der Verbindungsstab (50) ausserhalb der Längserstreckung des verglasten Schirmes (34) und des abklappbaren Flügel (36) sind.

9. Maschine nach einem der Ansprüche 2 bis 8, dadurch gekennzeichnet, dass der verglaste Schirm (34) und der abklappbare Flügel (36) Neigungen aufweisen, die zueinander bezüglich der vertikalen Mittelebene entgegengesetzt sind und zwischen 30 und 60° liegen.

10. Maschine nach Anspruch 9, dadurch gekennzeichnet, dass die Neigungen im Bereich von 45° liegen.

11. Maschine nach Anspruch 10, rückbezogen auf Anspruch 3, dadurch gekennzeichnet, dass der geneigte Abschnitt (32) des festen hinteren Schirmes eine Neigung aufweist, die der des verglasten Schirmes (34) entgegengesetzt ist bezüglich der mittleren Vertikalebene (P) und im Bereich von 45° liegt.

12. Maschine nach einem der Ansprüche 1 bis 11, die mit einem Fördermittel (20) versehen ist, welches um eine seitliche Längsachse (ZZ) schwingen kann, dadurch gekennzeichnet, dass die Achse bezüglich der vertikalen Mittelebene (P) auf der dem verglasten Schirm (34) entgegengesetzte Seite liegt, und dass der verglaste schirm an jedem seiner Enden vertikale Abdeckungen (62, 64) aufweist, die in der geschlossenen Lage des verglasten Schirmes des gesamten Raum, den der verglaste Schirm, der feste hintere Schirm und der Oberrand des betrachteten Fördermittels in Arbeitslage freilassen, einnimmt.

13. Maschine nach einem der Ansprüche 2 bis 12, wobei die Lötwanne (18) zumindest eine Umlaufpumpe (68) für die flüssige Lötlegierung und einen Ablasshahn (70) aufweist, dadurch gekennzeichnet, dass die Umlaufpumpe, der Ablasshahn und die gegebenenfalls zugeordneten Organe (66) seitlich versetzt bezüglich der Installationsebene und dem Fördermittel in einer Zone angeordnet sind, die dem verglasten Schirm (34) und dem abklappbaren Flügel (36) in deren geschlossener Lage eingeschrieben ist.

**Claims**

1. Wave soldering machine for soldering printed circuit boards, comprising an elongated supporting frame (10) standing on the ground and defining at its upper end a mounting plane (12) onto which are arranged the components of the machine, namely: a fluxing device (14), a preheating device (16) and a soldering device (18), as well as a conveyor (20) extending above said devices substantially horizontally or slightly inclined upwards or downwards, which conveyor is designed to carry printed circuit boards along a suitable path with respect to the devices of the machine; said constituent elements having a longitudinal vertical median plane (P), said machine comprising a hood (22) enclosing said elements and provided with windows for visual inspection and access doors, one portion at least of the hood being mounted for rotating about a horizontal axis situated above the constituent elements of the machine, from a closed position to an open position in which said hood portion is situated high enough above the ground to allow the passage of an operator, characterized in that said hood comprises on one side of the median plane and substantially over the whole length of the machine, a front wall (34) provided with a window panel over a major portion of its surface, slanted when in closed position, from an upper edge (33) substantially horizontal situated above the constituent elements and adjacent their median plane, to a lower edge (38) substantially horizontal jutting out with respect to the constituent elements and situated at a short distance, in the vertical direction, from said mounting plane, said front wall being mounted for pivoting about its upper edge, from said closed position to an open position in which said lower edge is situated high enough above the ground to allow the passage of an operator, and in that said hood comprises a folding down flap (36) which extends between said mounting plane (12) and the lower edge (38) of the front wall (34).

2. Machine according to claim 1, characterized in that it comprises, on the other side of said median plane, a fixed rear wall (24) extending between said mounting plane (12) and the upper edge (33) of the front wall.

3. Machine according to claim 2, characterized in that said rear wall (24) comprises a vertical portion (28) extending from said mounting plane, followed by an inclined portion (32) reaching up to said upper edge (33).

4. Machine according to claim 3, characterized in that said inclined portion (32) of the fixed rear wall is equiped in the inside with a sealed lighting device (56).

5. Machine according to claim 3 or 4, characterized in that said inclined portion (32) of the fixed rear wall is equipped on the inside with an air sucking device (58) and in that it comprises an air inlet lip (60) adjacent the lower edge (38) of the front panel (34).

6. Machine according to any of claims 2 to 5, equipped with a control panel (46) characterized in that said control panel is movably mounted on said frame (10) between a working position and a retracted position, said control panel constituting in the working position, a device for locking the window panel and the folding down flap in closed position.

7. Machine according to claim 6, characterized in that said control panel (46) comprises a display box (48) directionally positioned in parallel to the window panel (34), and at a short distance therefrom adjacent its lower edge (38), and a connecting bracket (50) between the frame and the display box, which bracket is directionally-positioned in parallel to the folding down flap and at a short distance therefrom.

8. Machine according to claim 7, characterized in that said control panel (46) is mounted on a carriage (52) guided in translation on said frame (10) and through the entire length of the machine, along with it can thus take up any wanted working position, said retracting position of the display box corresponding to an outermost translation of the carriage (52) for which the display box (48) and connecting bracket (50) are situated beyond the longitudinal territory of the window flap (34) and of the folding down flap (36).

9. Machine according to any one of claims 2 to 8, characterized in that said window panel (34) and folding down flap (36) have mutually opposite inclinations with respect to the vertical median plane, between 30 and 60 degrees.

10. Machine according to claim 9, characterized in that said inclinations are around 45 degrees.

11. Machine according to claim 10 taken as depending of claim 3, characterized in that the inclined portion (32) of the fixed rear wall has an inclination which is opposite that of the window panel (34) with respect to the vertical median plane (P), around 45 degrees.

12. Machine according to any one of claims 1 to 11, equipped with a conveyor (20) pivotable about a lateral longitudinal axis (ZZ), characterized in that said axis is situated, with respect to said vertical median plane (P), on the opposite side of the window panel (34), and said window panel is equipped at both ends with vertical closure plates (62, 64) which occupy, in the window panel closed position, the whole space between the window panel, the fixed rear wall and the upper edge of the conveyor in its working position.

13. Machine according to any of claims 2 to 12, in which said solder pot (18) comprises at least a liquid solder alloy circulating pump (68) and a draining valve system (70), characterized in that said circulating pump, draining valve system, and any other elements (66) associated thereto are laterally offset with respect to said mounting plane and to said conveyor, inside a zone inscribed between the window panel (34) and the folding down flap (36) in closed position.

Fig-3

34
62
24
20
46
36
10
B
A

Fig-4

38
34
33
32
A
B
24
20
28
12
10
36

EP 0 186 539 B1

Fig. 5

Fig. 6

11

Fig 1

EP 0 186 539 B1

Fig. 2

EP 0 186 539 B1